# EUROPÄISCHE PATENTSCHRIFT

(11) **EP 1 080 000 B1**
(45) Veröffentlichungstag und Bekanntmachung des Hinweises auf die Patenterteilung: **26.06.2002**
(21) Anmeldenummer: 99920588.3
(22) Anmeldetag: 01.04.1999
(51) Int. Cl.: B60T 1/06, F16D 55/22, B60T 17/22

(54) **BREMSEINRICHTUNG FÜR RÄDER VON FAHRZEUGEN**
BRAKE DEVICE FOR THE WHEELS OF A VEHICLE
SYSTEME DE FREINAGE POUR ROUES DE VEHICULES

(30) Priorität: 20.05.1998 DE 19822606
(43) Veröffentlichungstag der Anmeldung: 07.03.2001
(73) Patentinhaber: Dr.Ing. h.c.F. Porsche Aktiengesellschaft, 70435 Stuttgart (DE); BPW Bergische Achsen Kommanditgesellschaft, 51674 Wiehl (DE)
(72) Erfinder: HÄUSSLER, Harald, D-71292 Friolzheim (DE); PIETSCH, Helmut, D-71254 Ditzingen (DE); MARTIN, Roland, D-71287 Weissach (DE); MERTENS, Carsten-Jörg, D-71134 Aidlingen (DE); GRUNWALD, Artur, D-51674 Wiehl (DE); PEHLE, Michael, D-51371 Leverkusen (DE)
(86) Internationale Anmeldenummer: EP9902267
(87) Internationale Veröffentlichungsnummer: WO9959852

(56) Entgegenhaltungen:
- EP-A- 0 849 486

## Beschreibung

Die Erfindung bezieht sich auf eine Bremseinrichtung für Räder von Fahrzeugen, insbesondere von Fahrzeuganhängern, nach dem Oberbegriff des Anspruchs 1.

Der Ausbau von einer oder mehreren, axial verschieblichen Bremsscheiben aus einem unverschieblichen Bremssattel bei Verschleiß oder zu sonstigen Zwecken erfolgt in bekannter Weise durch einen Ausbau des Bremssattels und einer nachfolgenden Demontage der Bremsscheibe.

Aufgabe der Erfindung ist es, eine Bremseinrichtung für Räder von Fahrzeugen, insbesondere von Fahrzeuganhängern zu schaffen, bei der ein Aus- und Einbau von einer oder mehreren Bremsscheiben aus bzw. in den Bremssattel in einfacher Weise gewährleistet ist.

Aus der EP 0 849 486 A2 (dieses Dokument fält unter Artikel 54(3) EPC) ist ein Verfahren zum Wechseln einer Bremsscheibe einer Scheibenbremse aus einem schwimmend gelagerten Bremssattel bekannt. Die Bremsscheibe ist mit einer Bremsscheibennabe unverschieblich auf einem Radnabenhals angeordnet und über einen Haltering an dem Radnabenhals festgelegt. Zum Ausbau der Bremsscheibe wird zuerst der mit dem Radnabenhals verbundene Haltering und danach ein Haltebügel zum Ausbau der Bremsbeläge gelöst. Danach kann die Bremsscheibe durch ein Verkippen zwischen Anschlägen des Bremssattels herausgezogen werden.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, daß eine oder mehrere Bremsscheiben nach einem Abziehen einer Radnabe von einer Radachse bei unverändert belassenem Bremssattel, d. h. bei befestigtem Bremssattel, aus diesem herausziehbar sind. Zu diesem Zweck sind die Bremsbeläge der Bremsscheibe bzw. der Bremsscheiben ausgebaut, so daß die Bremsscheibe ungelagert im Bremssattel angeordnet ist. Insbesondere ist es nicht erforderlich, zum Ausbau der Bremsscheiben zuvor ein Blockierelement für die Bremsscheibe zu demontieren, wie es bei feststehenden Bremsscheiben in Verbindung mit axial verschiebbaren Bremssätteln vorzusehen ist.

Zur Abstützung der ungelagerten Bremsscheibe im Bremssattel ist ein Halteelement an diesem befestigbar, welches die Bremsscheibe(n) unterseitig untergreifen kann, damit die Einbaulage beibehalten wird.

Zum Ausbau der Bremsscheibe kann diese aufgrund des entstandenen Freiraums im Bremssattel - Entfall der Bremsbeläge und Trennung von der Lagerung auf der Radnabe - auf der Radachse von einer vertikalen Einbaulage in schräge Ausbaulagen gekippt werden. In diesen Ausbaulagen erfolgt zumindest eine Abstützung auf dem freien Ende der Radachse.

Die Bremsscheibe wird zum Ausbauen in die Schrägstellungen gekippt, damit ein Freikommen von einer vorderen Begrenzungswand des Bremssattels erzielt werden kann.

Damit keine Beschädigungen des freien Endes der Radachse beim Herausziehen der Bremsscheibe aus dem Bremssattel erfolgen kann, ist dieser Bereich mit einer Schutzhülse oder einer sonstigen Abdeckung versehen, auf der dann die Bremsscheibe gleitend herausziehbar ist.

Bei einem Einsetzen der Bremsscheibe bzw, der Bremsscheiben erfolgt der Vorgang in umgekehrter Folge wie bei einem Ausbau.

Damit nach einem Einsetzen der Bremsscheibe bzw. der Bremsscheiben die Radnabe in einfacher Weise wieder auf die Radachse gesetzt werden kann, ist auf der Radachse ein Zentrierelement vorgesehen, welches insbesondere das Nabenlager zentriert auf die Radachse einfädelt. Durch das Zentrierelement wird das Nabenlager bezügliich seines Lagersitzes zentriert, bevor die Radnabe in Eingriff mit den Bremsscheiben gelangt. Dieses Zentrierelement weist hierzu eine angeschrägte Vorderkante auf.

Insbesondere ist das Element durchmessergleich mit einem folgenden, den Lagersitz bildenden Abschnitt der Radachse ausgebildet. Anstelle des Zentrierelementes kann die äußere Kontur der Radachse auch so ausgebildet sein, daß der den Lagersitz des Nabenlagers bildende Abschnitt verlängert ist. Hierbei kann der verlängerte Bereich einen etwas geringeren Durchmesser als der Lagersitz aufweisen.

Die Bremseinrichtung kann mehrere Bremsscheiben aufweisen, die alle durch Schrägstellung nacheinander aus- und auch wieder einbaubar sind.

Ein Ausführungsbeispiel der Erfindung ist in den Zeichnungen dargestellt und wird im folgenden näher beschrieben.

Es zeigen
- Fig. 1: eine Ansicht auf eine Bremseinrichtung im Schnitt im zusammengebauten Zustand,
- Fig. 2: eine Ansicht auf die Bremseinrichtung gemäß Fig. 1 mit demontierter Radnabe,
- Fig. 3: eine Ansicht auf die Bremseinrichtung ohne Radnabe mit zwei Bremsscheiben und zwischenliegenden Bremsbelägen,
- Fig. 4: eine Ansicht auf die Bremseinrichtung mit ausgebauten Bremsbelägen und Bremsscheiben in vertikaler Einbaulage sowie einer Schutzhülse und einem Zentrierelement auf der Radachse,
- Fig. 5 bis 9: die einzelnen Zwischenstellungen der Bremsscheibe zum Ausbau aus dem Bremssattel,
- Fig. 10: eine Darstellung der Radachse mit Zentrierelement,
- Fig. 11: eine schaubildliche Darstellung der Bremseinrichtung mit Halteelement für die Bremsscheiben und
- Fig. 12: eine weitere schaubildliche Darstellung des Halteelements für die Bremsscheiben von unten her gesehen.

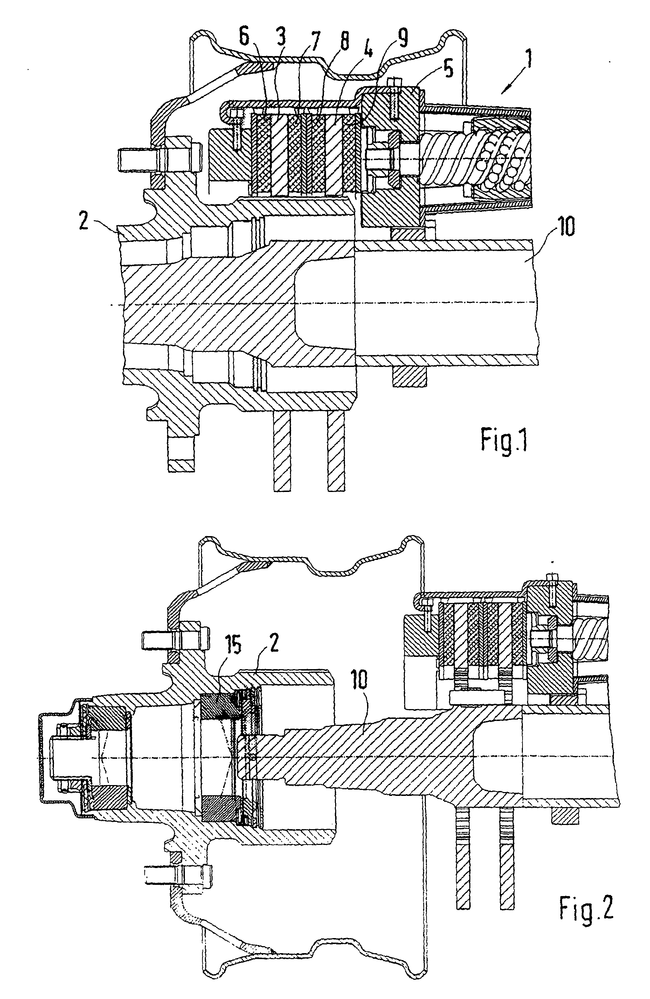

Die Bremseinrichtung 1 umfaßt auf einer Radnabe 2 bezüglich von Rädern drehfeste, aber axial verschiebbare Bremsscheiben 3, 4 (siehe Fig. 1). Es kann auch nur eine Bremsscheibe oder es können auch mehr als zwei Bremsscheiben im Bremssattel 5 angeordnet sein. Zwischen den Bremsscheiben 3, 4 und jeweils außenseitig der Bremsscheibe sind insgesamt Bremsbeläge 6 bis 9 - wie in Fig. 1 dargestellt - angeordnet.

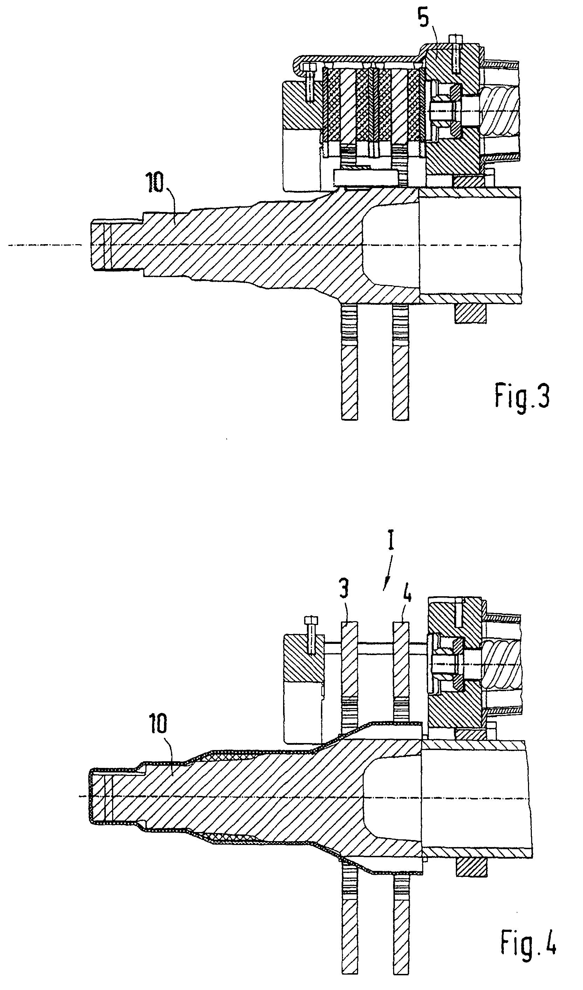

Zum Ausbau der Bremsscheibe 3 oder 4 bzw. der Bremsscheiben 3 und 4 wird die Radnabe 2 von der Radachse 10 getrennt, wie in Fig. 2 näher dargestellt ist. Anschließend wird eine Halteklammer am Bremssattel 5 gelöst und die Bremsbeläge 6 bis 9 entfernt, wie in Fig. 4 dargestellt ist.

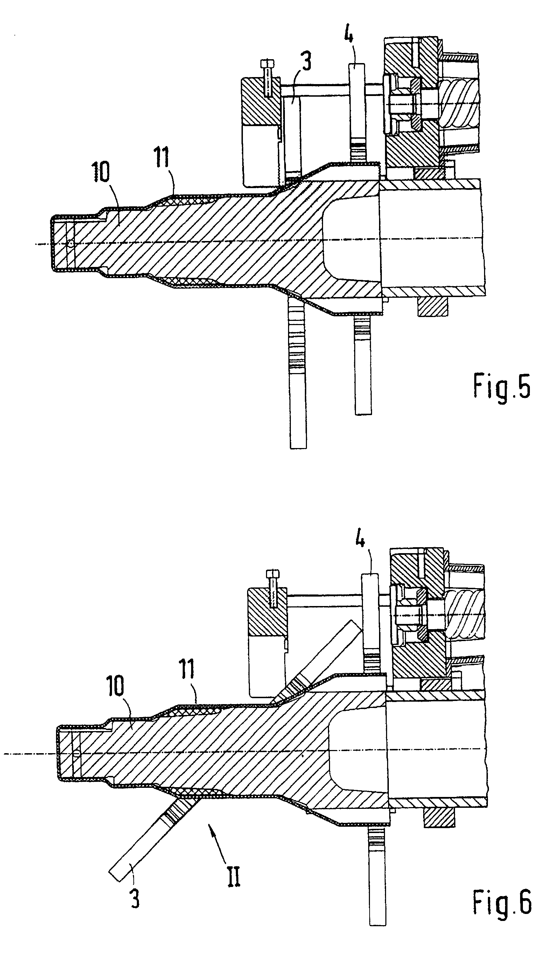

Die freistehenden Bremsscheiben 3 und 4 können nunmehr ausgebaut werden, wobei sie von der vertikalen Einbaulage I in unterschiedliche schräggestellte Ausbaulagen II bis V überführt werden, wie die Fig. 6 bis 9 im einzelnen zeigen.

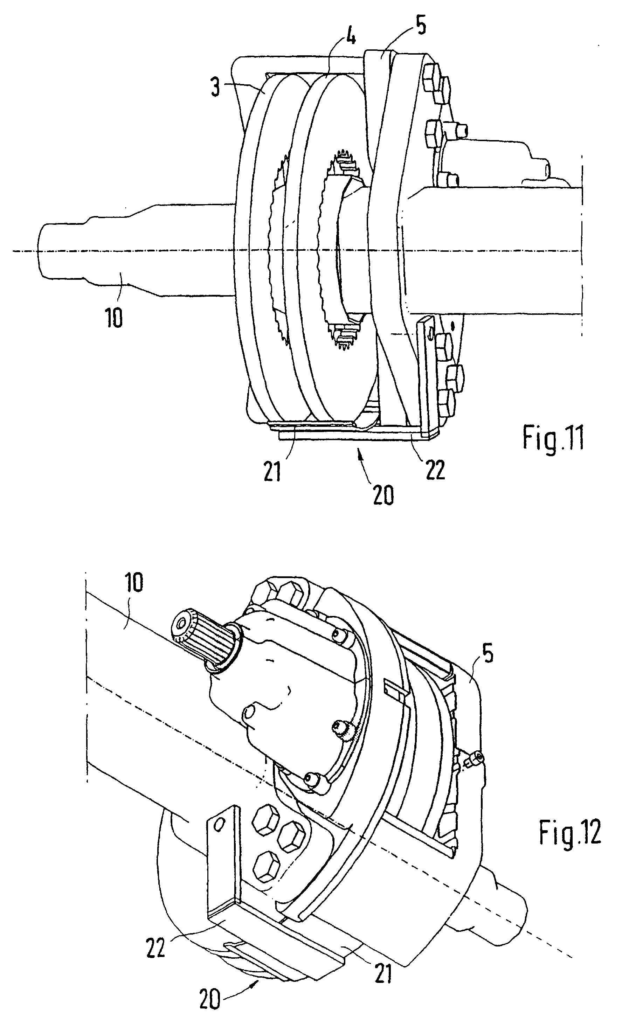

Damit nach dem Trennen der Radnabe 2 von der Radachse 10 die Bremsscheiben 3, 4 nicht auf die Radachse 10 fallen können, ist ein in Fig. 11 und 12 gezeigtes Halteelement 20 unterhalb der Bremsscheiben 3, 4 vorgesehen. Dieses besteht aus einer die Bremsscheiben 3, 4 in der Einbaulage untergreifenden Schale 21, welche von einem Winkelhalter 22 getragen wird. Dieser ist mit dem Bremssattel 5 (siehe Fig. 11) lösbar zu verbinden.

Das freie Ende der Radachse 10 weist zur Vermeidung von Beschädigungen beim Ausund Einbau der Bremsscheiben 3, 4 eine Schutzhülse 11 oder ein gleichwirkendes Schutzelement - wie in Fig. 5 bis 9 gezeigt - auf, an der sich die Bremsscheiben beim Ein- und Ausbau gleitend abstützen können.

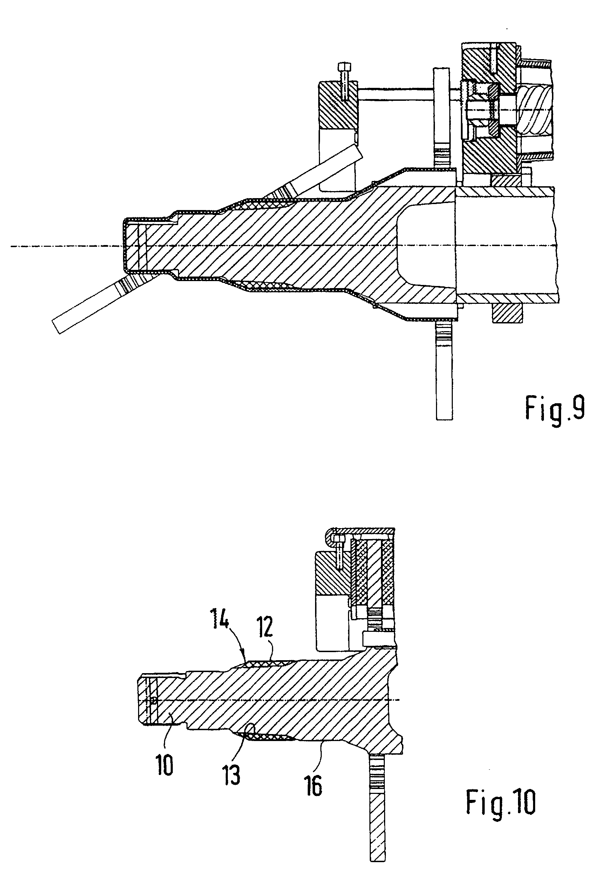

Zum zentrierten Zusammenbau der Radnabe 2 mit der Radachse 10 bzw. zum Einfädeln auf die Radnabe 2 weist diese ein Zentrierelement 12 auf (siehe Fig. 10). Dieses ist in einer Absetzung 13 der Radachse 10 vorgesehen und weist vorderseitig eine Anschrägung 14 auf, die das Einfädeln des Lagers 15 in der Radnabe 2 auf einen Lagersitz 16 der Radachse 10 erleichtert, indem das Lager 15 konzentrisch zum Lagersitz 16 ausgerichtet wird, bevor die Radnabe 2 in Eingriff mit der vorderen Bremsscheibe gelangt..

Der Einbauvorgang der Bremsscheiben 3, 4 entspricht in umgekehrter Reihenfolge dem Ausbauvorgang der Bremsscheiben 3 und/oder 4.

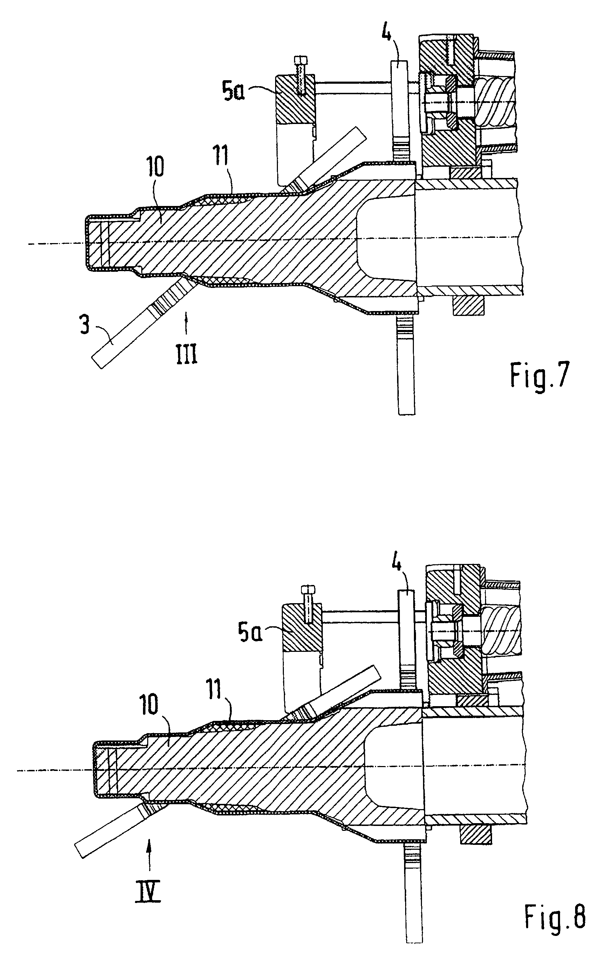

Der Ausbauvorgang der Bremsscheiben 3, 4 erfolgt in folgenden Schritten. Zuerst wird die Radnabe 2 von der Radachse 10 getrennt. Das Halteelement 20 in Fig. 11 und 12 untergreift die Bremsscheiben 3, 4. Nachfolgend werden die Bremsbeläge 6 bis 9, welche in Fig. 1 gezeigt sind, aus dem Bremssattel 5 entfernt. Danach wird die vordere Bremsscheibe 3 aus der vertikalen Einbaustellung I (siehe Fig. 5) in eine erste schräge Ausbaustellung II (siehe Fig. 6) gekippt. Sie kann sich hierbei auf der Radachse 10 über die Schutzhülse 11 abstützen. Nach einer weiteren Schrägstellung in die Ausbaustellungen III bis V (siehe Fig. 7 bis 9) kann die Bremsscheibe 3 frei von der Abstützwand 5a des Bremssattels 5 aus dem Bremssattel 5 herausgezogen werden. Nachfolgend wird die weitere Bremsscheibe 4 entsprechend aus dem Bremssattel 5 herausgezogen.

## Patentansprüche (Patentansprüche für folgende(n) Vertragsstaat(en): DE, ES, FR, GB, IT)

1. Bremseinrichtung für Räder von Fahrzeugen, insbesondere von Fahrzeuganhängern, mit einem unverschieblichen Bremssattel (5) und darin geführten Bremsbelägen (6 bis 9), zwischen denen mindestens eine bezüglich der Räder drehfeste aber axial verschiebbare Bremsscheibe angeordnet ist, **dadurch gekennzeichnet, daß** die axial verschiebbare Bremsscheibe (3,4) angeordnet ist, **dadurch gekennzeichnet, daß** die axial verschiebbare Bremsscheibe (3, 4) im Bremssattel (5) bei demontierter Radnabe (2) und ausgebauten Bremsbelägen (6 bis 9) von einer vertikalen Einbaulage (I) in schräge Ausbaulagen (II bis V) überführbar ist, wobei die Bremsscheibe (3, 4) bei demontierter Radnabe (2) über ein Halteelement (20) im Bremssattel (5) abgestützt ist und in den schrägen Ausbaulagen die Bremsscheibe (3, 4) eine frei von einer vorderen Abstützwand (5a) des Sattels (5) gekippte Stellung im Bremssattel (5) einnimmt.

2. Bremseinrichtung nach Anspruch 1, **dadurch gekennzeichnet, daß** das Halteelement (20) am Bremssattel (5) befestigbar ist und aus einer die Bremsscheibe (3, 4) untergreifenden Schale (21) besteht, die mit einem Winkelhalter (22) am Bremssattel (5) verbunden ist.

3. Bremseinrichtung nach den Ansprüchen 1 oder 2, **dadurch gekennzeichnet, daß** ein freies Ende einer Radachse (10) mit einer Schutzhülse (11) versehen ist, die sich bis in den Bereich des Bremssattels (5) und der in vertikalen Einbaulage (I) befindlichen Bremsscheiben (3, 4) erstreckt.

4. Bremseinrichtung nach den Ansprüchen 1, 2 oder 3, **dadurch gekennzeichnet, daß** die Bremsscheiben (3, 4) in den gekippten Schrägstellungen (II bis V)auf der Schutzhülse (11) der Radachse (10) abgestützt ist und in diesen Stellungen zumindest auf dem freien Ende der Radachse (10) aus dem Bremssattel (5) herausziehbar ist.

5. Bremseinrichtung nach den Ansprüchen 1, 2, 3 oder 4, **dadurch gekennzeichnet, daß** am freien Ende der Radachse (10) ein Zentrierelement (12) mit einer vorderseitigen Anschrägung (14) für mindestens ein Lager (15) der Radnabe (2) in einer Absetzung (13) angeordnet ist, die einen durchmessergleichen Abschnitt mit einem folgenden Abschnitt (16) der Radachse (10) bildet.

6. Bremseinrichtung nach den Ansprüchen 1, 2, 3 oder 4, **dadurch gekennzeichnet, daß** am freien Ende der Radachse (10) ein Abschnitt (16) zur Aufnahme eines Lagers (15) der Radnabe (2) so ausgeformt ist, daß das Lager (15) in Eingriff mit dem Abschnitt (16) gelangt, bevor die Radnabe (20) in Eingriff mit einer der Bremsscheiben (3) steht.

## Patentansprüche (Patentansprüche für folgende(n) Vertragsstaat(en): AT, BE, CH, LI, CY, DK, FI, GR, IE, LU, MC, NL, PT, SE)

1. Bremseinrichtung für Räder von Fahrzeugen, insbesondere von Fahrzeuganhängern, mit einem unverschieblichen Bremssattel (5) und darin geführten Bremsbelägen (6 bis 9), zwischen denen mindestens eine bezüglich der Räder drehfeste aber axial verschiebbare Bremsscheibe (3, 4) angeordnet ist, **dadurch gekennzeichnet, daß** die axial verschiebbare Bremsscheibe (3, 4) im Bremssattel (5) bei demontierter Radnabe (2) und ausgebauten Bremsbelägen (6 bis 9) von einer vertikalen Einbaulage (I) in schräge Ausbaulagen (II bis V) überführbar ist, bei der die Bremsscheibe (3,4) eine frei von einer vorderen Abstützwand (5a) des Sattels (5) gekippte Stellung im Bremssattel (5) einnimmt.

2. Bremseinrichtung nach Anspruch 1, **dadurch gekennzeichnet, daß** die Bremsscheibe (3, 4) bei demontierter Radnabe (2) über ein Halteelement (20) in der vertikalen Einbaulage (I) im Bremssattel (5) abgestützt ist.

3. Bremseinrichtung nach den Ansprüchen 1 oder 2, **dadurch gekennzeichnet, daß** das Halteelement (20) am Bremssattel (5) befestigbar ist und aus einer die Bremsscheibe (3, 4) untergreifenden Schale (21) besteht, die mit einem Winkelhalter (22) am Bremssattel (5) verbunden ist.

4. Bremseinrichtung nach den Ansprüchen 1, 2 oder 3, **dadurch gekennzeichnet, daß** ein freies Ende einer Radachse (10) mit einer Schutzhülse (11) versehen ist, die sich bis in den Bereich des Bremssattels (5) und der in vertikalen Einbaulage (1) befindlichen Bremsscheiben (3, 4) erstreckt.

5. Bremseinrichtung nach den Ansprüchen 1,2,3 oder 4, **dadurch gekennzeichnet, daß** die Bremsscheiben (3, 4) in den gekippten Schrägstellungen (II bis V)auf der Schutzhülse (11) der Radachse (10) abgestützt ist und in diesen Stellungen zumindest auf dem freien Ende der Radachse (10) aus dem Bremssattel (5) herausziehbar ist.

6. Bremseinrichtung nach den Ansprüchen 1, 2, 3, 4 oder 5, **dadurch gekennzeichnet, daß** am freien Ende der Radachse (10) ein Zentrierelement (12) mit einer vorderseitigen Anschrägung (14) für mindestens ein Lager (15) der Radnabe (2) in einer Absetzung (13) angeordnet ist, die einen durchmessergleichen Abschnitt mit einem folgenden Abschnitt (16) der Radachse (10) bildet.

7. Bremseinrichtung nach den Ansprüchen 1, 2, 3, 4 oder 5, **dadurch gekennzeichnet, daß** am freien Ende der Radachse (10) ein Abschnitt (16) zur Aufnahme eines Lagers (15) der Radnabe (2) so ausgeformt ist, daß das Lager (15) in Eingriff mit dem Abschnitt (16) gelangt, bevor die Radnabe (20) in Eingriff mit einer der Bremsscheiben (3) steht.

## Claims (Claims for the following Contracting State(s): DE, ES, FR, GB, IT)

1. A brake device for wheels of vehicles, in particular of vehicle trailers, having a non-displaceable brake calliper (5) and brake linings (60 to 9) guided therein, between which is arranged at least one brake disc rotationally fixed but axially displaceable with respect to the wheels, **characterized in that** the axially displaceable brake disc (3, 4) can be transferred from a vertical fitted position (**I**) into oblique removal positions (**II** to **V**) in the brake calliper (5) when the wheel hub (2) is dismantled and the brake linings (6 to 9) are removed, wherein the brake disc (3, 4) is supported in the brake calliper (5) by way of a retaining member (20) when the wheel hub (2) is dismantled and in the oblique removal positions the brake disc (3, 4) occupies a position - tilted freely from a front support wall (5a) of the calliper (5) - in the brake calliper (5).

2. A brake device according to Claim 1, **characterized in that** the retaining member (20) can be secured to the brake calliper (5) and comprises a shell (21) engaging under the brake disc (3. 4) and connected to an angled retaining means (22) on the brake calliper (5).

3. A brake device according to Claim 1 or 2, **characterized in that** a free end of a wheel axle (10) is provided with a protective sleeve (11) extending into the region of the brake calliper (5) and of the brake discs (3, 4) present in the vertical fitted position **(I).**

4. A brake device according to Claim 1, 2 or 3, **characterized in that** in the tilted oblique positions (**II** to **V**) the brake discs (3, 4) [are] supported on the protective sleeve (11) of the wheel axle (10) and in these positions can be withdrawn from the brake calliper (5) at least at the free end of the wheel axle (10).

5. A brake device according to Claim 1, 2, 3 or 4. **characterized in that** at the free end of the wheel axle (10) a centring member (12) with a bevelled portion (14) at the front for at least one bearing (15) of the wheel hub (2) is situated in an offset (13) forming a portion of equal diameter with a following portion (16) of the wheel axle (10).

6. A brake device according to Claim 1, 2, 3 or 4, **characterized in that** a portion (16) for receiving a bearing (15) of the wheel hub (2) is formed on the free end of the wheel axle (10) in such a way that the hearing (15) engages with the portion (16) before the wheel hub (20) [*sic - recte* (2)] engages with one of the brake discs (3).

## Claims (Claims for the following Contracting State(s): AT, BE, CH, LI, CY, DK, FI, GR, IE, LU, MC, NL, PT, SE)

1. A brake device for wheels of vehicles, in particular of vehicle trailers, having a non-displaceable brake calliper (5) and brake linings (6 to 9) guided therein, between which is arranged at least one brake disc (3, 4) rotationally fixed but axially displaceable with respect to the wheels, **characterized in that** the axially displaceable brake disc (3, 4) can be transferred from a vertical fitted position (**I**) into oblique removal positions (**II** to **V**) in the brake calliper (5) when the wheel hub (2) is dismantled and the brake linings (6 to 9) are removed, wherein the brake disc (3, 4) occupies a position - tilted freely from a front support wall (5a) of the calliper (5) - in the brake calliper (5).

2. A brake device according to Claim 1, **characterized in that** the brake disc (3, 4) is supported in the vertical fitted position (**I**) in the brake calliper (5) by way of a retaining member (20) when the wheel hub (2) is dismantled.

3. A brake device according to Claim 1 or 2, **characterized in that** the retaining member (20) can be secured to the brake calliper (5) and comprises a shell (21) engaging under the brake disc (3, 4) and connected to an angled retaining means (22) on the brake calliper (5).

4. A brake device according to Claim 1, 2 or 3, **characterized in that** a free end of a wheel axle (10) is provided with a protective sleeve (11) extending into the region of the brake calliper (5) and of the brake discs (3, 4) present in the vertical fitted position (I).

5. A brake device according to Claim 1, 2, 3 or 4, **characterized in that** in the tilted oblique positions (**II** to **V**) the brake discs (3, 4) are supported on the protective sleeve (11) of the wheel axle (10) and in these positions can be withdrawn from the brake calliper (5) at least at the free end of the wheel axle (10).

6. A brake device according to Claim 1, 2, 3, 4 or 5, **characterized in that** at the free end of the wheel axle (10) a centring member (12) with a bevelled portion (14) at the front for at least one bearing (15) of the wheel hub (2) is situated in an offset (13) forming a portion of equal diameter with a following portion (16) of the wheel axle (10).

7. A brake device according to Claim 1, 2, 3, 4 or 5, **characterized in that** a portion (16) for receiving a bearing (15) of the wheel hub (2) is formed on the free end of the wheel axle (10) in such a way that the bearing (15) engages with the portion (16) before the wheel hub (2) engages with one of the brake discs (3).

## Revendications (Revendications pour l'(les) Etat(s) contractant(s) suivant(s): DE, ES, FR, GB, IT)

1. Dispositif de freinage pour roues de véhicules, en particulier de remorques de véhicule, comportant une sellette de frein (5) non déplaçable et des garnitures de frein (6 à 9) guidées dans celle-ci, entre lesquelles est disposé au moins un disque de frein qui ne peut tourner par rapport aux roues mais qui est déplaçable axialement, **caractérisé en ce que** le disque de frein (3, 4) déplaçable axialement peut être transféré, dans la sellette de frein (5), avec moyeu de roue (2) démonté et garnitures de frein (6 à 9) déposées, d'une position de montage verticale (I) dans des positions de dépose obliques (II à V), le disque de frein (3, 4) étant soutenu, lorsque le moyeu de frein (2) est démonté, dans la sellette de frein (5) par l'intermédiaire d'un élément de maintien (20), et, dans les positions de dépose obliques, le disque de frein (3, 4) prend, dans la sellette de frein (5), une position basculée librement depuis une paroi d'appui avant (Sa) de la sellette (5).

2. Dispositif de freinage selon la revendication 1, **caractérisé en ce que** l'élément de maintien (20) peut être fixé à la sellette de frein (5) et est constitué d'une coquille (21) qui passe sous le disque de frein (3, 4) et qui est reliée à la sellette de frein (5), par une cornière (22).

3. Dispositif de freinage selon les revendications 1 ou 2, **caractérisé en ce qu'**une extrémité libre d'un essieu (10) est pourvue d'un manchon de protection (11) qui s'étend jusque dans la zone de la sellette de frein (5) et des disques de frein (3, 4) se trouvant dans la position de montage verticale (I).

4. Dispositif de freinage selon les revendications 1, 2 ou 3, **caractérisé en ce que** les disques de frein (3, 4) sont soutenus dans les positions obliques basculées (II à V), sur le manchon de protection (11) de l'essieu (10) et, dans ces positions, ils peuvent être extraits de la sellette de frein (5), au moins sur l'extrémité libre de l'essieu (10).

5. Dispositif de freinage selon les revendications 1, 2, 3 ou 4, **caractérisé en ce qu'**à l'extrémité libre de l'essieu (10) est disposé un élément de centrage (12) avec un chanfrein (14) côté avant pour au moins un palier (15) du moyeu de roue (2), dans une partie en retrait (13) qui forme une section de même diamètre avec une section suivante (16) de l'essieu (10).

6. Dispositif de freinage selon les revendications 1, 2, 3 ou 4, **caractérisé en ce qu'**à l'extrémité libre de l'essieu (10) est formée une section (16) destinée à recevoir un palier (15) du moyeu de roue (2) de manière que le palier (15) parvienne en prise avec la section (16), avant que le moyeu de roue (20) ne soit en prise avec l'un des disques de frein (3).

## Revendications (Revendications pour l'(les) Etat(s) contractant(s) suivant(s): AT, BE, CH, LI, CY, DK, FI, GR, IE, LU, MC, NL, PT, SE)

1. Dispositif de freinage pour roues de véhicules, en particulier de remorques de véhicule comportant une sellette de frein (5) non déplaçable et des gamitures de frein (6 à 9) guidées dans celle-ci, entre lesquelles est disposé au moins un disque de frein qui ne peut tourner par rapport aux roues mais qui est déplaçable axialement, **caractérisé en ce que** le disque de frein (3, 4) déplaçable axialement peut être transféré, dans la sellette de frein (5), avec moyeu de roue (2) démonté et garnitures de frein (6 à 9) déposées, d'une position de montage verticale (I) dans des positions de dépose obliques (II à V), dans lesquelles le disque de frein (3, 4) prend, dans la sellette de frein (5), une position basculée librement depuis une paroi d'appui avant (Sa) de la sellette (5).

2. Dispositif de freinage selon la revendication 1, **caractérisé en ce que**, lorsque le moyeu de roue (2) est démonté, le disque de frein (3, 4) est soutenu dans la sellette de frein (5), dans la position de montage verticale (I), au moyen d'un élément de maintien (20).

3. Dispositif de freinage selon la revendication 1 ou 2, **caractérisé en ce que** l'élément de maintien (20) peut être fixé à la sellette de frein (5) et est constitué d'une coquille (21) qui passe sous le disque de frein (3, 4) et qui est reliée à la sellette de frein (5), par une cornière (22).

4. Dispositif de freinage selon les revendications 1, 2 ou 3, **caractérisé en ce qu'**une extrémité libre d'un essieu (10) est pourvue d'un manchon de protection (11) qui s'étend jusque dans la zone de la sellette de frein (5) et des disques de frein (3, 4) se trouvant dans la position de montage verticale (I).

5. Dispositif de freinage selon les revendications 1, 2 3 ou 4, **caractérisé en ce que** les disques de frein (3, 4) sont soutenus dans les positions obliques basculées (II à V), sur le manchon de protection (11) de l'essieu (10) et, dans ces positions, ils peuvent être extraits de la sellette de frein (5), au moins sur l'extrémité libre de l'essieu (10).

6. Dispositif de freinage selon les revendications 1, 2, 3, 4 ou 5, **caractérisé en ce qu'**à l'extrémité libre de l'essieu (10) est disposé un élément de centrage (12) avec un chanfrein (14) côté avant pour au moins un palier (15) du moyeu de roue (2), dans une partie en retrait (13) qui forme une section de même diamètre avec une section suivante (16) de l'essieu (10).

7. Dispositif de freinage selon les revendications 1, 2, 3, 4 ou 5, **caractérisé en ce qu'**à l'extrémité libre de l'essieu (10) est formée une section (16) destinée à recevoir un palier (15) du moyeu de roue (2) de manière que le palier (15) parvienne en prise avec la section (16), avant que le moyeu de roue (20) ne soit en prise avec l'un des disques de frein (3).
